Europäisches Patentamt

European Patent Office

Office européen des brevets

(11) Publication number: **0 144 182**
**A2**

# (12) EUROPEAN PATENT APPLICATION

(21) Application number: **84307941.9**

(22) Date of filing: **15.11.84**

(51) Int. Cl.⁴: **G 02 B 5/22**
**H 01 J 9/227**

(30) Priority: **28.11.83 JP 223894/83**

(43) Date of publication of application:
**12.06.85 Bulletin 85/24**

(84) Designated Contracting States:
**DE FR GB**

(71) Applicant: **SONY CORPORATION**
**7-35 Kitashinagawa 6-Chome Shinagawa-ku**
**Tokyo 141(JP)**

(72) Inventor: **Ishikawa, Reiji c/o Patent Department**
**Sony Corporation 7-35 Kitashinagawa-6**
**Shinagawa-ku Tokyo(JP)**

(72) Inventor: **Kimura, Tomohiro c/o Patent Department**
**Sony Corporation 7-35 Kitashinagawa-6**
**Shinagawa-ku Tokyo(JP)**

(74) Representative: **Thomas, Christopher Hugo et al,**
**D Young & Co 10 Staple Inn**
**London WC1V 7RD(GB)**

(54) **Light-transmitting filters.**

(57) In a method of making an illuminance-correcting light-transmitting filter (1) employed in an exposure device for the preparation of the phosphor screen of a colour cathode ray tube, modulated laser light (R) is irradiated on the surface of a filter base plate (12) on which an opaque thin layer (12A) of the recording material has previously been formed. A pattern of through-holes of variable size or density is formed as the thin layer (12A) is vapourized, so that the light transmitting filter (1) can be prepared with high accuracy in a short time. The filter base plate (12) is mounted on a movable stage (13), the movement of which in the X and Y-directions is controlled by a computer (10).

EP 0 144 182 A2

./...

# FIG.2

## LIGHT-TRANSMITTING FILTERS

This invention relates to methods of producing light-transmitting filters suitable for luminance correction purposes in an exposure device for producing a phosphor screen of a cathode ray tube, and to light-transmitting filters produced by such methods. By the use of methods according to the invention light-transmitting filters having different light transmittance in different portions of the filter, and preset distribution characteristics of transmitted light may be produced.

On the phosphor screen of a colour cathode ray tube, there are arranged an extremely large number of dots or stripes of tricolour phosphors which emit red, blue and green light when excited by an electron beam. In preparing the screen, a phosphor slurry is applied to the inner surface of the panel of a cathode ray tube. The slurry coating is exposed to a light beam by an exposure device making use of a light-transmitting filter, and is then developed.

For producing the light-transmitting filter used in the exposure device, there are known various methods, for example, photographic methods, transcription methods, and methods of sequentially combining small pieces of different light transmittance.

In the photographic or transcription method, a master pattern consisting of the reverse pattern of the light-transmitting filter to be produced is prepared by a plotter and transcribed onto a photographic dry plate having a higher gamma value. Alternatively, the step of producing the master pattern is omitted and a pattern consisting of a combination of stripes of variable width is formed on a photographic dry plate with a higher gamma value, by exposing the dry plate to a light beam whose intensity is modulated by means of an interposed rotary plate. The pattern thus formed on the dry plate is developed and fixed. A glass plate coated with a photoresist layer is intimately applied to the photographic dry plate. After exposure, a carbon slurry is poured on the glass plate. After development, the pattern is transcribed to the carbon mass to form the light-transmitting filter having the preset light transmittance distribution characteristics. This method has the deficiency that several steps are required, so that the manufacturing time can generally not be reduced. Moreover, it is difficult with this method to produce the light transmitting filter with higher accuracy because of the error caused during the steps of preparation of the master pattern, exposure of the photographic dry plate, development/fixing and transcription to and development of the carbon slurry coating.

There are also known methods of changing the light transmittance of the filter by changing the stripe width or line width, or by changing the pitch or line width of the mesh pattern. However, with these known methods of changing the line widths, it is difficult to produce the filter with sufficient accuracy, or to avoid the generation of moire.

In recent years a high definition colour cathode ray tube with an extremely narrow phosphor stripe interval pitch of 0.2 to 0.3 mm has been used. In particular, a high degree of white uniformity is required of the high definition cathode ray tube employed in a broadcasting station for monitoring purposes. For this reason, a high definition and high fidelity control technique is required for the preparation of the high definition colour cathode ray tube, so that a high-definition light-transmitting filter needs to be used in the exposure device. However, it is difficult with the above described methods to prepare a high definition and high fidelity light-transmitting filter capable of meeting such requirements.

According to the present invention there is provided a method of producing a selective light-transmitting filter comprising the steps of:
forming an opaque layer of heat mode optical recording material on a transparent base plate;
modulating a laser beam by an optical modulator; and
irradiating said modulated laser beam on said layer for evaporating selected portions of said layer to produce a pattern of light transmitting through-holes in said layer to form a predetermined light transmittance distribution for said filter.

A light-transmitting filter produced in this way may be used for example in an exposure device for the preparation of a phosphor screen of a high definition colour cathode ray tube with high definition and fidelity.

The invention will now be described by way of example with reference to the accompanying drawings, throughout which like parts are referred to by like references, and in which:

Figure 1 is a cross-sectional view showing an exposure device for the preparation of the phosphor screen of a colour cathode ray tube;

Figure 2 is a block view showing a computer-aided design (CAD) device for executing a method according to the present invention of producing the light-transmitting filter; and

Figures 3 and 4 are diagrammatic views illustrating the relationship between the through-holes formed by the device on the surface of the filter base plate and pulse signals applied to the light modulator.

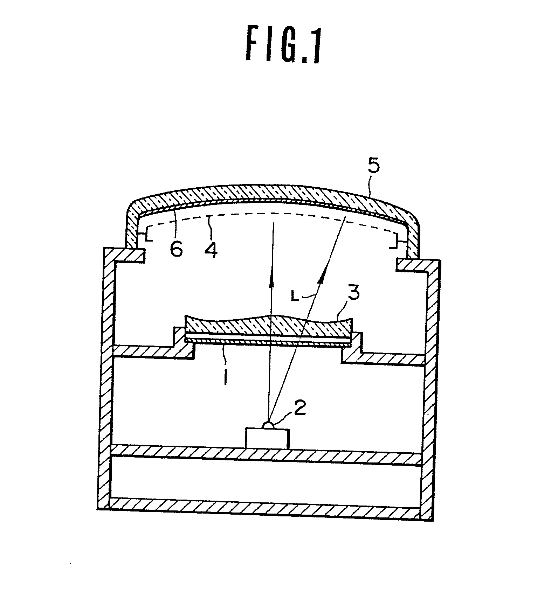

In Figure 1 there is shown an exposure device employed for instance for the preparation of a phosphor screen of a cathode ray tube. The device has a light-transmitting filter 1 and a light source 2 formed by an ultrahigh-voltage mercury lamp provided with a forced air cooling system. A phosphor slurry 6 formed on the inner surface of a panel 5 of the cathode ray tube is exposed to the light L emitted by the light source 2 and passed through a correction lens 3, and thereby sensitized in accordance with a pattern set by a colour selective electrode 4. The phosphor slurry 6 consists of a phosphor material dispersed into a resin of the type cured by ultraviolet rays. The phosphor slurry 6 thus exposed to the light and thereby sensitized is subjected to a developing step. The phosphorescent screen can be formed on the inner surface of the panel 5 of the cathode ray tube by repetition of the above described operation for each of the three colour phosphors.

The planar light-transmitting filter 1 is arranged below the correction lens 3, the function of which is to cause the exposure light path to coincide with the trajectory of the electron beam. The filter 1, which is arranged in this manner between the light source 2 and the corrections lens 3, for example, has a preset pattern of light transmittance distribution, such that the light transmittance is different in different portions of the filter 1, and the light L transmitted through the filter 1 shows a preset two-dimensional light intensity distribution characteristic. For this reason, the filter 1 is placed within the exposure device for illuminance compensation in such a manner that the phosphor slurry coating is exposed at the correct positions of the dots or stripes to be formed on the phosphor screen, and the dots or stripes are formed with a uniform configuration on the overall phosphor screen. It should be noted that, since the light emitted by the light source 2 is an ultraviolet light having a wavelength of, for example, 3650 angstroms, the filter 1 needs to be fabricated of a material that is not decomposed by the ultraviolet rays.

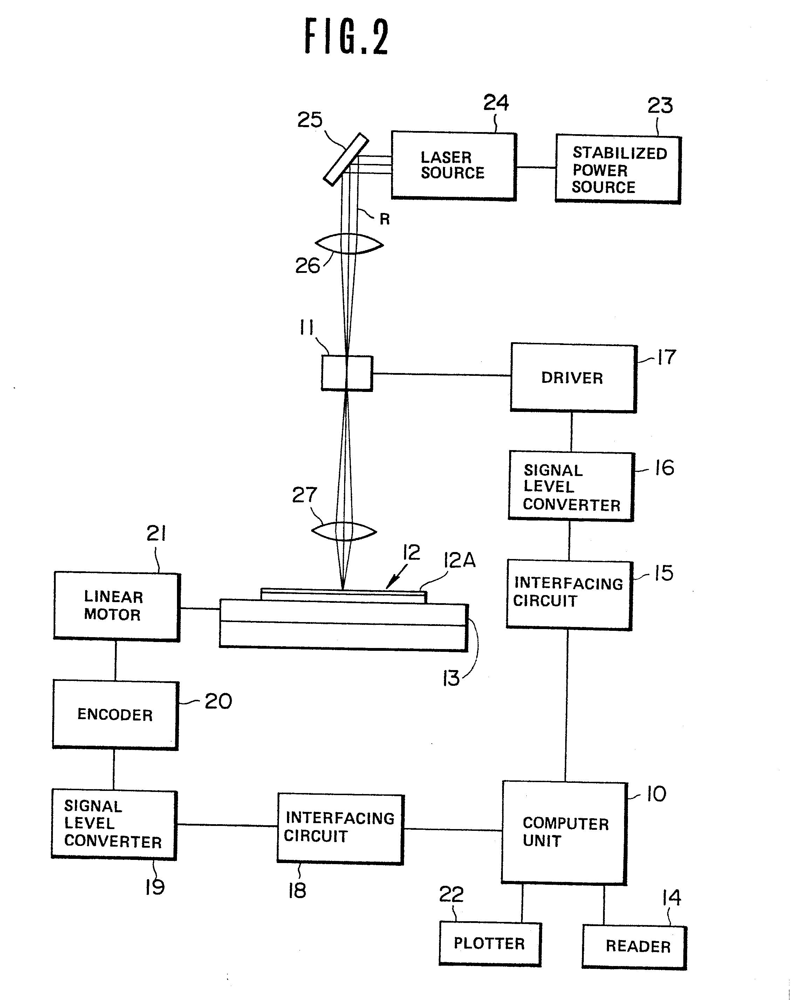

Figure 2 is a block diagram of a device for carrying out the process for the preparation of a light-transmitting filter. The filter prepared by this device is used for example in the above-described exposure device. By the operation of the filter arranged within the exposure device, the distribution of the light directed to the phosphor slurry coating for exposure may be corrected to an optimum value, so that the configuration of the phosphor dots or stripes that make up the phosphor screen of the colour cathode ray tube is rendered uniform on the overall phosphor screen surface.

The surface of the filter base plate on which a thin film of heat mode optical recording medium is formed is irradiated by a laser beam for selectively evaporating the thin film and forming a pattern of light transmitting through-holes, so that a light-transmitting filter with predetermined light transmittance distribution may be prepared in a short time and with high accuracy. The laser beam is modulated with a light modulator under the command of a computer unit. The filter base plate is secured to a stage which is movable in X-Y directions under the command of the computer unit.

Referring to Figure 2, there is shown a CAD device for the preparation of the light-transmitting filter with the aid of a computer system. A stage 13 on which a light modulator 11 and a filter base plate 12 are mounted, and which is movable in X and Y directions is controlled by a computer unit 10. The signals corresponding to the desired light transmittance distribution of the light-transmitting filter to be prepared are read out from a signal input device or reader 14 and entered into the computer unit 10. The output data from the computer unit 10 are supplied to an interface circuit 15 where they are converted into control signals which are used for controlling the light modulator 11. These control signals are then supplied to a signal level converter 16 where they are converted for example into transistor-transistor logic (TTL) level signals. The output signals from the signal level converter 16 are supplied to a drive circuit 17 where they are converted to voltage signals capable of directly driving the light modulator 11. The output data from the computer unit 10 are also supplied to an interface circuit 18 where they are converted into control signals for controlling the movement of the stage 13 in the X-direction (transverse direction) and the Y-direction (vertical direction). These control signals are then supplied to a signal level converter 19 where they are converted for example into TTL signal levels. The output signals from the signal level converter 19 are then supplied to an encoder 20 where they are encoded and translated into signals capable of driving a linear motor 21, which is thereby activated for controlling the movement of the movable stage 13 at a rate of for example 200 to 1000 mm/sec. The output data from the computer unit 10 are also supplied to a plotter 22 for delineating, for example, a characteristic curve showing the light transmittance distribution of the light-transmitting filter being produced by the device shown in Figure 2.

The filter base plate 12, which is transparent and formed, for example, of glass, is securely mounted on the stage 13. To the overall surface of the filter base plate 12, there is applied a layer, for example, of tellurium (Te) to a thickness for example of 1000 to 1500 angstroms by, for example, vacuum deposition, for providing a thin layer 12A of opaque heat mode optical recording material. It should be noted that, since the filter base plate 12 is used per se as the light transmitting filter in the exposure device shown in Figure 1, the filter base plate 12 is preferably fabricated of glass which is low in alkaline content, such as quartz glass or acrylic resin (PMMA) in order that the base plate is not discoloured by the ultraviolet rays in the exposure device and can be used for a prolonged time.

An argon gas laser with, for example, a rated output of four watts is used as the laser light source 24 to which an exciting current is supplied from a stabilized power source 23. The argon laser is highly stable and the laser output has a stability of about 0.2 percent related to the time elapsed. A krypton laser, which is equally stable, may be used instead of the argon laser. The laser beam R which is supplied from the laser light source 24 and consisting of the fundamental $TEM_{oo}$ mode with a uniform beam intensity distribution is reflected by a mirror 25 and condensed within the light modulator 11 by a first lens 25. The light modulator 11 makes use of acousto-optic cells (AO cells) or electro-optic cells (EO cells), and the light passing through the light modulator 11 can be deflected towards left and right by the crystal lattice of the piezo-optical crystals becoming deformed under the applied voltage. It should be noted that the laser light R is modulated or turned on and off at a rate of $10^{-6}$ to $10^{-10}$ sec when passing through the light modulator 11 which makes use of, for example, EO cells and to which the signal voltage is applied from the drive circuit 17. The primary mode laser beam which has passed through the light modulator 11 and which accounts for about 50 percent of the total laser beam is collected by a second lens 27, and the laser beam of the multiple longitudinal modes is irradiated on the thin layer 12A of the filter base plate 12. As the laser beam forms light spots on the thin layer 12A of the filter base plate 12, the thin layer 12A is selectively vapourized in these spots so as to form light-emitting through-holes. The light modulator 11 is controlled by the computer unit 10 at this time, while the stage 13 on which the filter base plate 12 is securely mounted is moved in both the X and Y directions under the command of the computer unit 10, so that a pattern of the through-holes indicative of the preset light transmittance distribution is formed on the filter base plate 12.

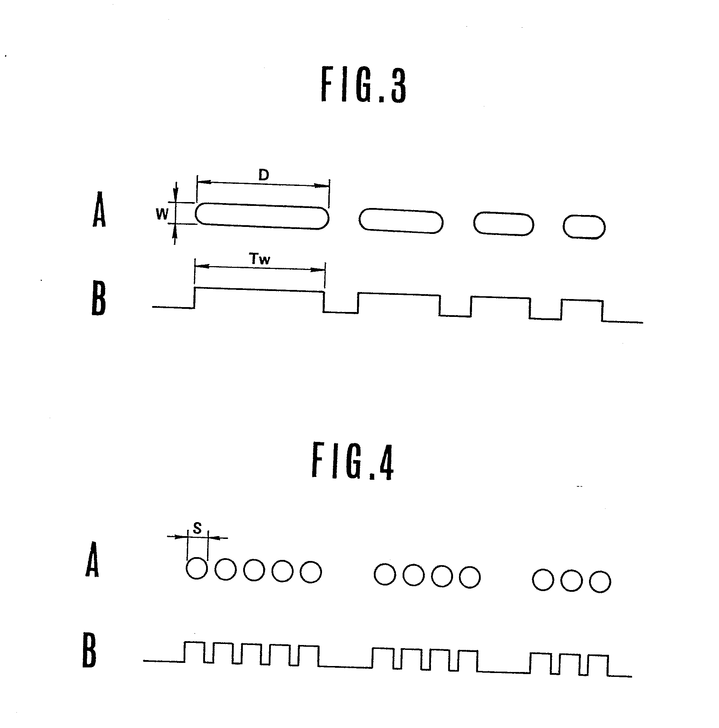

In Figures 3 and 4, there is shown a relationship between the through-holes formed on the filter base plate 12 and the pulse signals applied to the light modulator 11. Referring to Figure 3, as the voltage signal shown at B is applied to the light modulator 11, the through-holes shown at A are formed on the filter base plate 12. The through-hole shown at A in Figure 3 is constant in width W but variable in length D depending on the pulse width Tw of the applied signal. It is thus seen that the preset light transmittance distribution can be realised on the filter base plate 12 by forming a pattern of the through-holes with variable lengths D on the base plate 12.

Alternatively, as shown at A in Figure 4, the through-holes formed on the filter base plate 12 may be changed in density instead of in duration depending upon the voltage signal shown at B in Figure 4. In this case, the diameter S of each through-hole is the same, but the density of distribution of the through-holes is variable so that the preset light transmittance distribution may be realised on the filter base plate 12.

The thin layer 12A obtained by vacuum deposition on the filter base plate 12 is poor in mechanical strength and suceptible to damage. It is also chemically unstable and can be oxidized easily. For this reason, a protective film for the thin layer 12A may be provided, or a glass plate or the like may be affixed to the surface of the filter base plate 12 by means of an optical adhesive. In this manner, a light-transmitting filter can be provided which is immune to opto-chemical reaction and able to withstand the irradiation of ultraviolet rays in the exposure device for the preparation of the phosphor screen.

0144182

Since this light-transmitting filter is prepared by the two steps of irradiation with laser light beam and the formation of the protective coating for the thin layer, the number of the process steps can be reduced as compared with the conventional process. A light-transmitting filter used for example for producing phosphor stripes at intervals of 0.2 mm on the phosphor screen can be prepared in one to two hours, whereas five to six hours were required in the preparation of the same filter with the conventional system.

Also, in the conventional method, in order to provide the filter with a preset light transmittance distribution, the intensity of the exposure light of the photographic dry plate was varied with the use of a rotary disc for providing a pattern of variable stripe widths. In the present method, instead of changing the light intensity for changing the strip width, the intensity of the laser light radiated on the surface of the filter base plate 12 is maintained constant and the pulse width Tw of the voltage applied to the light modulator 11 is changed for changing the length D of the through-holes formed on the base plate 12. Alternatively, the diameter D of the through-holes may be kept constant and the distribution of through-hole density may be changed by pulse number modulation for realising the preset light transmittance distribution on the filter base plate. In this manner, the rotary plate, for which a sufficient accuracy can generally not be expected, is dispensed with, and the laser light is modulated by the light modulator 11 operating accurately in response to the input signal in such a manner the length D or the density of the through-holes is changed and the desired light transmittance distribution can be accurately and faithfully reproduced on the filter base plate 12. Thus, on account of the improvement in reproducibility of the input signals, the accuracy in the light transmittance of 1 to 2% heretofore possible at the photographic developing stage can be raised to 0.2 to 3%.

In the above description, tellurium (Te) is used for the formation of the thin layer 12A of the heat mode optical recording material. However, as an alternative, chromium (Cr) can be deposited to a thickness of 1000 to 2000 angstroms for the formation of the thin layer 12A. It should be noted that, should be filter base plate 12 be formed of glass, micro-sized cracks are liable to develop in the glass due to heat stress when the metallized film is irradiated with the laser light. This is because the chromium (Cr) has a higher boiling point than tellurium (Te). Therefore in this case the filter base plate is preferably formed of quartz glass.

It should be noted that such materials as TeCu, TeC, AsTe, TeSe, AsSeTe, TeOx (tellurium oxide), $As_2Se_3$, Se, CuPc (cupro-phthalo-cyanine), Bi or Ni may be used in place of Te and Cr for forming the opaque thin layer 12A of the heat mode recording material to a sub-micron size.

The results of our experiments on using a SiO vapourized film as the thin layer 12A show that the periphery of the through-holes tends to be changed into transparent $SiO_2$ and blurred in contour so that the peripheral portion need to be reshaped.

The present invention can be applied to the preparation not only of light-transmitting filters used in exposure devices for phosphor screens, but to light-transmitting filters used for other purposes.

In the foregoing description, the width of the light transmitting through-holes is maintained constant and the length D thereof is changed, or alternatively, the diameter S of the through-holes is maintained constant and the density of the through-holes is generally changed. However, the desired preset light transmittance may also be achieved by changing the intensity of the laser beam or by changing the width of the light-transmitting stripes by means of an appropriate optical control system.

9                                      0144182

## CLAIMS

1.    A method of producing a selective light-transmitting filter (1) comprising the steps of:
forming an opaque layer (12A) of heat mode optical recording material on a transparent base plate (12);
modulating a laser beam (R) by an optical modulator (11); and
irradiating said modulated laser beam (R) on said layer (12A) for evaporating selected portions of said layer (12A) to produce a pattern of light transmitting through-holes in said layer (12A) to form a predetermined light transmittance distribution for said filter (1).

2.    A method according to claim 1 wherein said base plate (12) is a glass plate.

3.    A method according to claim 1 wherein said base plate (12) is a quartz plate.

4.    A method according to claim 1 wherein said base plate (12) is an acrylic resin plate.

5.    A method according to claim 1 wherein said layer (12A) is formed of tellurium (Te).

6.    A method according to claim 1 wherein said layer (12A) is formed of chromium (Cr).

7.    A method according to claim 1 wherein said layer (12A) is formed of TeCu, TeC, AsTe, TeSe, AsSeTe, TeOx, $As_2Se_3$, Se, CuPc, Bi or Ni.

8.    A method according to claim 1 wherein the intensity of said laser beam (R) is constant and the pulse width of the voltage applied to said optical modulator (11) is changed so that the lengths of said light-transmitting through-holes are changed.

9.    A method according to claim 1 wherein the diameters of said light-transmitting through-holes are constant and the repetitive number of the pulses applied to said optical modulator (11) is changed so that the density distribution of said through-holes is changed.

10.    A light-transmitting filter (1) produced by a method according to any one of the preceding claims.

# FIG.1

2/3

FIG.2

0144182

# FIG.3

A

B

# FIG.4

A

B